# EUROPEAN PATENT APPLICATION

(11) **EP 4 290 619 A1**
(43) Date of publication of application: **13.12.2023**
(21) Application number: 22850700.0
(22) Date of filing: 26.04.2022
(51) Int. Cl.: H01M 4/587, H01M 10/0525, H01M 4/62, H01M 4/485, H01M 4/38, H01M 4/36, C22C 28/00

(54) **PREPARATION METHOD FOR LITHIUM-CONTAINING SILICON METAL, LITHIUM-CONTAINING SILICON METAL, LITHIUM-CONTAINING SIO AND USE THEREOF**

(30) Priority: 21.04.2022 CN 202210424024
(71) Applicant: Shinghwa Amperex Technology (Dongying) Co., Ltd., Dongying, Shandong 257503 (CN); Shinghwa Advanced Material Technology (Meishan) Co., Ltd., Meishan, Sichuan 620010 (CN); Shinghwa Advanced Material Group Co., Ltd., Dongying, Shandong 257503 (CN)
(72) Inventor: DING, Jun, Dongying, Shandong 257503 (CN); LIU, Denghua, Dongying, Shandong 257503 (CN); SUN, Mengqi, Dongying, Shandong 257503 (CN); DING, Weitao, Dongying, Shandong 257503 (CN)
(74) Representative: Meyer-Dulheuer MD Legal Patentanwälte PartG mbB
(86) International application number: PCT/CN2022/089403
(87) International publication number: WO 2023/201767

(57) **Abstract**

The present invention discloses a method for preparing a lithium-containing silicon metal, a lithium-containing silicon metal, and lithium-containing SiO and an application thereof. Raw materials include SiOz ore particles and a reducing agent, and at least part of the SiOz ore particles and the reducing agent undergo a heating and reduction reaction in a reducing furnace to obtain a silicon melt. The raw materials further include a Li source additive, and at least part of a Li source in the Li source additive forms a lithium-silicon alloy with the silicon melt during the heating and reduction reaction to obtain a lithium-containing silicon metal. In the present invention, the raw materials used are abundant, easy to obtain and low in cost; a preparation route used is simple and convenient to implement, facilitates large-scale mass production and application, and reduces a production risk, and Li in the obtained lithium-containing silicon metal and lithium-containing SiO are evenly distributed. When the lithium-containing SiO including a carbon coating layer in the present application is used as an active raw material for preparing a negative electrode plate of a battery, the battery can have a higher specific capacity and initial coulombic efficiency.

## Description

The present application claims priority to Chinese Patent Application No. 2022104240244, filed with the China National Intellectual Property Administration on April 21, 2022 and entitled "METHOD FOR PREPARING LITHIUM-CONTAINING SILICON METAL, LITHIUM-CONTAINING SILICON METAL, AND LITHIUM-CONTAINING SIO AND APPLICATION THEREOF", which is incorporated herein by reference in its entirety.

### TECHNICAL FIELD

The present invention relates to a method for preparing a lithium-containing silicon metal and a lithium-containing silicon metal, and further relates to lithium-containing SiO prepared based on the lithium-containing silicon metal and an application thereof.

### BACKGROUND

As an evaporation and new energy material, SiO has an expanding application scope in recent years. For example, SiO is used as an anode material of lithium ion batteries. To improve coulomb efficiency of lithium ion batteries, lithium doping technologies are proposed in existing technologies, and usually refer to direct embedding of a lithium metal or a lithium salt into finished SiO through a high-temperature reaction. Specifically, for example, the invention patent No. CN105789577A proposes a method for preparing a silicon anode material for a lithium ion battery and the silicon anode material, and proposes to embed in SiOz by using silicon and coat with a layer of lithium titanate. For another example, the invention patent No. CN110993949A discloses an anode material with a multi-coating structure, and a preparation method and use thereof. The anode material includes lithium-containing SiO and a lithium salt coating layer, a carbon coating layer and a polymer coating layer that sequentially coat a surface of the SiO. However, after searching and analyzing a large amount of information, the applicant has found that these lithium doping technologies are all to dope based on finished SiO, and generally have the disadvantages such as high process implementation costs, a high process implementation risk, and uneven distribution of lithium.

Based on the foregoing situation, the applicant has decided to seek technical solutions to solve the foregoing technical problems based on the inventor's years of dedicated research experience in the fields of silicon-based materials and lithium ion batteries.

### SUMMARY

In view of the problems, an objective of the present invention is to provide a method for preparing a lithium-containing silicon metal, a lithium-containing silicon metal, and lithium-containing SiO and an application thereof, where raw materials used are abundant, easy to obtain and low in cost; a preparation route used is simple and convenient to implement, facilitates large-scale mass production and application, and reduces a production risk, and Li in the obtained lithium-containing silicon metal and lithium-containing SiO are evenly distributed.

The technical solution of the present invention is as follows:

A method for preparing a lithium-containing silicon metal is provided, where raw materials include SiOz ore particles and a reducing agent, and at least part of the SiOz ore particles and the reducing agent undergo a heating and reduction reaction in a reducing furnace to obtain a silicon melt; and the raw materials further include a Li source additive, and at least part of a Li source in the Li source additive forms a lithium-silicon alloy with the silicon melt during the heating and reduction reaction to obtain a lithium-containing silicon metal.

Preferably, the SiO₂ ore particles include lithium-containing SiO₂ ore particles, which are obtained from a Li-containing mineral through crushing, separation and/or flotation; and the Li-containing mineral includes spodumene and/or lepidolite and/or petalite and/or montebrasite and/or eucryptite.

Preferably, a proportion of SiO₂ in the SiO₂ ore particles is 30wt%-99wt% in part by weight, and/or an average particle size of the SiO₂ ore particles is not greater than 10 mm.

Preferably, the Li source additive accounts for 0.05wt%-35wt% of the raw materials in part by weight; and/or the Li source additive includes Li and/or LizO and/or Li₂CO₃ and/or LiOH and/or LiH and/or LiF and/or Li₂SiO₄ and/or a lithium alloy; and/or the reducing agent includes a C-source reducing agent or an Al-source reducing agent or an Mg-source reducing agent, which is used to correspondingly undergo a carbothermic reduction reaction, an aluminothermic reduction reaction, or a magnesiothermic reduction reaction with the SiO₂ ore particles.

Preferably, the melt of the lithium-containing silicon metal is transferred to an ingot casting cell, and the melt in the ingot casting cell is cooled to obtain a solid lithium-containing silicon metal.

Preferably, a lithium-containing silicon metal is prepared by using the foregoing preparation method, where the lithium-containing silicon metal includes a lithium-silicon alloy and a lithium silicate salt.

Preferably, with the foregoing lithium-containing silicon metal and SiOz powder as raw materials, at least part of the lithium-containing silicon metal and the SiOz powder undergo a disproportionated sublimation reaction to obtain the lithium-containing SiO.

Preferably, the lithium-containing silicon metal is pre-crushed into lithium-containing silicon metal powder, the lithium-containing silicon metal powder and the SiO₂ powder are mixed and then placed in a crucible, and the crucible is placed in a vacuum deposition furnace for the disproportionated sublimation reaction; and a lithium-containing SiO gas generated by the disproportionated sublimation reaction is condensed to form blocky lithium-containing SiO.

Preferably, the lithium-containing SiO is crushed into lithium-containing SiO powder, and an outer surface of at least part of the lithium-containing SiO powder is coated with a carbon coating layer, to obtain lithium-containing SiO powder including a carbon coating layer.

Preferably, an application of the foregoing lithium-containing SiO is provided, where the lithium-containing SiO powder including a carbon coating layer is used as an active raw material for preparing a negative electrode plate of a battery.

In the present invention, a SiOz mineral (preferably a Li-containing SiOz mineral) is selected as a main raw material, and the Li source is doped during the heating and reduction reaction of the SiOz mineral with the reducing agent. Specifically, in implementation, the Li source additive is added into the raw material, and at least part of the Li source in the Li source additive and the silicon melt form a lithium-silicon alloy during the heating and reduction reaction to obtain a lithium-containing silicon metal. In a subsequent application, lithium-containing SiO can be prepared based on the disproportionated sublimation reaction between the lithium-containing silicon metal and SiOz powder. After being coated with carbon by using a known process, the lithium-containing SiO can be directly used as an active raw material for preparing a battery electrode plate.

In the present invention, the raw materials used are abundant, easy to obtain and low in cost; a preparation route used is simple and convenient to implement, facilitates large-scale mass production and application, and reduces a production risk, and Li in the obtained lithium-containing silicon metal and lithium-containing SiO are evenly distributed. When the lithium-containing SiO including a carbon coating layer in the present application is used as an active raw material for preparing a negative electrode plate of a battery, the battery can have a higher specific capacity and initial coulombic efficiency.

### BRIEF DESCRIPTION OF DRAWINGS

FIG. 1 is a state photo of a heating and reduction reaction in a reduction furnace in a specific implementation of the present invention;
FIG. 2 is a photo of a finished lithium-containing silicon metal prepared in a specific implementation of the present invention;
FIG. 3 is a photo of a finished lithium-containing silicon metal prepared in another specific implementation of the present invention;

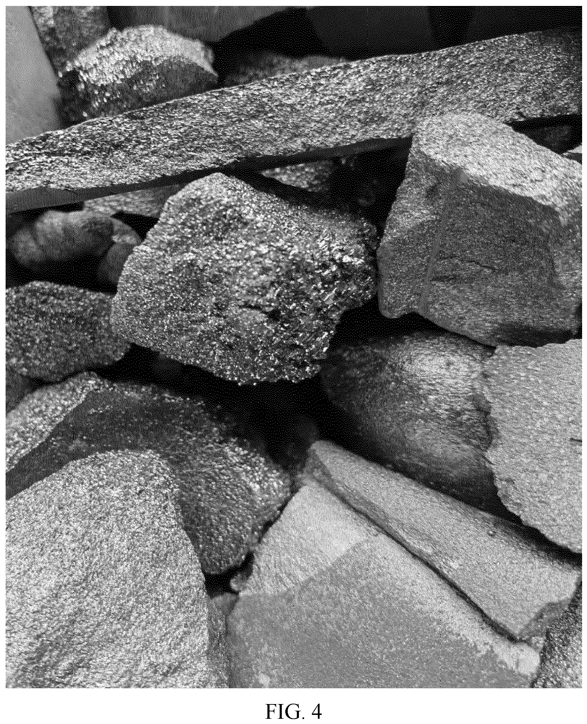

FIG. 4 is a photo of finished lithium-containing SiO prepared in a specific implementation of the present invention;
FIG. 5 is an XRD scanning photo of lithium-containing SiOz ore particles used in a specific implementation of the present invention;
FIG. 6 is an XRD scanning photo of a lithium-containing silicon metal prepared in a specific implementation of the present invention;
FIG. 7 is an XRD scanning photo of lithium-containing SiO prepared in a specific implementation of the present invention;
FIG. 8 is a scanning electron microscope (SEM) photo of a negative electrode plate of a button battery in a specific implementation of the present invention; and
FIG. 9 is a specific capacity test curve graph of a button battery in a specific implementation of the present invention.

### DESCRIPTION OF EMBODIMENTS

An embodiment discloses a method for preparing a lithium-containing silicon metal, where raw materials include SiOz ore particles and a reducing agent, and at least part of the SiOz ore particles and the reducing agent undergo a heating and reduction reaction in a reducing furnace to obtain a silicon melt; the raw materials further include a Li source additive, and at least part of a Li source in the Li source additive and the silicon melt form a lithium-silicon alloy during the heating and reduction reaction to obtain a lithium-containing silicon metal. Preferably, in this implementation, weight parts of the reducing agent added should be subject to the implementation of a full heating and reduction reaction of the SiO₂ ore particles.
Preferably, in this implementation, a proportion of SiO₂ in the SiO₂ ore particles is 30wt%-99wt% in part by weight, and/or an average particle size of the SiOz ore particles is not greater than 10 mm. The average particle size of the SiO₂ ore particles is more preferably 10 µm-5 mm, further preferably 30 µm-3 mm.

In this implementation, the Li source additive Preferably accounts for 0.05wt%-35wt% of the raw materials in part by weight, more preferably 0.1wt%-30wt%, further preferably 1wt%-20wt%, and still further preferably 5wt%-10wt%; preferably, in this implementation, the Li source additive includes Li and/or LizO and/or Li₂CO₃ and/or LiOH and/or LiH and/or LiF and/or Li₂SiO₄ (may further include Li₂SiO₂, lithium pentasilicate Li₂SiO₅, lithium metasilicate Li₂SiO₃, and the like) and/or a lithium alloy; and preferably, in this implementation, the reducing agent includes a C-source reducing agent or an Al-source reducing agent or an Mg-source reducing agent, which is used to correspondingly undergo a carbothermic reduction reaction, an aluminothermic reduction reaction, or a magnesiothermic reduction reaction with the SiO₂ ore particles.

The applicant has suggested that the C-source reducing agent should be used as a preferred reducing agent to undergo the carbothermal reduction reaction with the SiOz ore particles; preferably, in this implementation, the C-source reducing agent may be one or a mixture of more selected from petroleum coke, pitch coke, charcoal, a wood block, semi-coke, and low ash coal, and another known C-source reducing agent may also be used; and in this implementation, a ratio of the SiO₂ ore particles to the C-source reducing agent in part by weight preferably ranges from 1:1 to 6:1, more preferably 1.3: 1 to 4:1, and further preferably 1.5:1 to 3:1, with an objective of implementing the full heating ad reduction reaction of the SiO₂ ore particles.

Specifically, preferably, to improve the reduction effect, in this implementation, it is suggested that the C-source reducing agent includes a mixture of charcoal and low ash carbon, and a ratio of the charcoal to the low ash carbon in part by weight ranges from 1:1 to 1:4, more preferably 1:1.5 to 1:3, and further preferably 1:1.8 to 1:2.5.

Preferably, in this implementation, the SiO₂ ore particles include lithium-containing SiO₂ ore particles, which are obtained from a Li-containing mineral through crushing, separation and/or flotation; and preferably, in this implementation, the Li-containing mineral includes spodumene and/or lepidolite and/or petalite and/or montebrasite and/or eucryptite, and certainly, may also be another known Li-containing mineral, which falls within the applicable scope of the present application.

In the embodiment of the present application, it is preferable to use lithium-containing SiO₂ ore particles as raw materials, which can further improve compatibility with the Li source additive during the heating and reduction reaction, so that the distribution of the lithium-silicon alloy formed by the silicon melt and the Li source (usually simple-substance Li metal) is more stable. Further, in practice, when the Li source additive is the Li metal, the Li metal can directly form a lithium-silicon alloy with the silicon melt, and when the Li source additive is a lithium-containing compound, the Li source additive is reduced into a simple-substance Li metal in the carbothermal reduction reaction environment. LizO and Li₂CO₃ have good stability and are preferred Li source additives. However, it should be noted that when LizO and/or Li₂CO₃ are/is used as a Li source additive(s), it has been found through Gibbs free energy analysis that under conventional conditions, it is difficult to reduce LizO and Li₂CO₃ into a simple-substance Li metal. However, the applicant has found that under an extremely high temperature condition in the reduction furnace, C and Si both act as reducing agents, which can effectively reduce Li₂CO₃ into LizO and COz, and the generated LizO wraps the undecomposed Li₂CO₃. Part of LizO continues to react to form the simple-substance Li metal, which then forms a lithium-silicon alloy with the silicon melt, and a trace amount of part of an unreacted lithium salt compound enters the lithium-containing silicon metal during subsequent ramming of the reduction furnace to further form an alloy.

Preferably, to improve the effect of the heating and reduction reaction of the SiO₂ ore particles and the reducing agent in the reduction furnace, in this implementation, a known carbothermic reduction furnace may be used as a reaction device. Preferably, an electrode of the carbothermic reduction furnace is a graphite electrode or a carbon electrode, with a voltage on a low-voltage side kept at 80-190 KV, a current of 35,000-300,000 A, and an electrode temperature of 2,000-2,400°C, a single feeding amount may be controlled at about 100 KG, continuous reactions are performed, and the time for a single carbothermal reduction reaction may be 2-3 h.

Preferably, in this implementation, the melt of the lithium-containing silicon metal is transferred to an ingot casting cell, and the melt in the ingot casting cell is cooled to obtain a solid lithium-containing silicon metal.

Preferably, in this implementation, a lithium-containing silicon metal is prepared by using the foregoing preparation method in this embodiment, and the lithium-containing silicon metal includes a lithium-silicon alloy and a lithium silicate salt. Specifically, in implementation, after the melt in the ingot casting cell is cooled, it can be confirmed by sampling analysis that the obtained product is the lithium-containing silicon metal, and overall purity of the lithium-containing silicon metal can be kept at 95% or above, preferably at 97% or above. Lithium in the lithium-containing silicon metal exists in the form of the lithium-silicon alloy, and may also exist in the form such as Li₂SiO₂ and/or Li₂SiO₄ and/or Li₂SiO₅ and/or Li₂SiO₃ and/or another lithium silicate salt. Li distribution in the lithium-containing silicon metal is uniform, reliable, and stable.

Preferably, lithium-containing SiO is obtained with the foregoing lithium-containing silicon metal in this embodiment and SiOz powder as raw materials, and by causing at least part of the lithium-containing silicon metal and the SiO₂ powder to undergo a disproportionated sublimation reaction. Further, preferably, in practice, the lithium-containing silicon metal is pre-crushed into lithium-containing silicon metal powder, the lithium-containing silicon metal powder and the SiOz powder are mixed and then placed in a crucible, and the crucible is placed in a vacuum deposition furnace (with the heating temperature controlled within a range of 1000-1400°C) for the disproportionated sublimation reaction; and a lithium-containing SiO gas generated by the disproportionated sublimation reaction enters a condensation chamber for condensation to form blocky lithium-containing SiO. In this implementation, the average particle size of the lithium-containing silicon metal powder is preferably not greater than 4 mm, more preferably in a range of 10 µm-3 mm, and further preferably 20 µm-2 mm. The ratio of the lithium-containing silicon metal powder to the SiOz powder in part by weight may be about 1:2.

Preferably, in this implementation, the lithium-containing SiO is crushed into lithium-containing SiO powder, and an outer surface of at least part of the lithium-containing SiO powder is coated with a carbon coating layer, to obtain lithium-containing SiO powder including a carbon coating layer. In this implementation, the average particle size of the lithium-containing SiO powder is suggested to be preferably not greater than 50 µm, more preferably 2-30 µm. In this implementation, for a process for manufacturing the carbon coating layer, reference may be directly made to the related known processes, and the process is not specifically and uniquely limited in this embodiment. For example:

The process for manufacturing the carbon coating layer in this embodiment may include: evenly mixing special asphalt, a phenolic resin, furfuryl alcohol, and the like with the lithium-containing SiO powder in the embodiment of the present application, heating to 700-1000°C in an inert atmosphere for sintering, cooling and then taking out, and crushing and depolymerizing to complete the manufacturing. The process may alternatively include: placing the lithium-containing SiO powder in the embodiment of the present application in a shaking bed, a fluidized bed or a vibrating bed, introducing a gas source such as methane, acetylene, propylene, ethanol vapor, and an inert gas, heating to 600-1000°C for a cracking reaction, and cooling and then taking out to complete the manufacturing. Certainly, another known method may also be used to manufacture the carbon coating layer in this embodiment, and the process is not uniquely limited in the present application.

Preferably, an application of the foregoing lithium-containing SiO is to use the lithium-containing SiO powder including a carbon coating layer as an active raw material for preparing a negative electrode plate of a battery. During specific implementation, a process for preparing the negative electrode plate of a battery may be any known process, which is not the innovative content of the present application, and is not limited in the present application.

To enable a person skilled in the art to better understand the technical solutions in the present invention, the technical solutions in the embodiments of the present invention are clearly and completely described below with reference to the accompanying drawings in the embodiments of the present invention. Obviously, the described embodiments are merely some, rather than all, of the embodiments of the present invention. All other embodiments obtained by a person of ordinary skill in the art based on the embodiments of the present invention without creative efforts shall fall within the protection scope of the present invention.

### Embodiment 1: Preparation of a lithium-containing silicon metal by performing the following steps

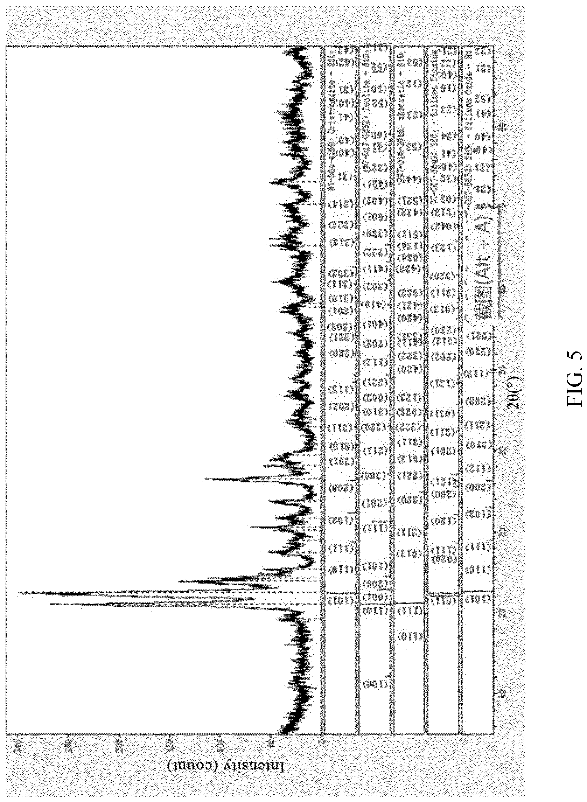

Step 1: Obtain lithium-containing SiOz ore particles (see FIG. 5 for an XRD scanning image thereof) from pegmatite containing spodumene and lepidolite as a raw material through crushing, separation, and flotation. According to testing, an average particle size of the lithium-containing SiOz ore particles was about 1 mm, and a proportion of SiOz was 70% in part by weight.

Step 2: Take 100 kg of lithium-containing SiOz ore particles obtained in step 1, and evenly mix with charcoal and low ash coal as carbonaceous reducing agents, where the total weight of the charcoal and the low ash coal is 40 kg, and a ratio of the charcoal to the low ash carbon in part by weight is controlled at 32:68.

Step 3: Add Li₂CO₃ as a Li source additive into the mixture obtained in step 2, and evenly mix, where the Li source additive accounts for 6wt% of the mixed raw materials in part by weight.

Step 4: Make the mixture obtained in step 3 into blocks with appropriate sizes (specific specifications may be determined based on an actual requirement).

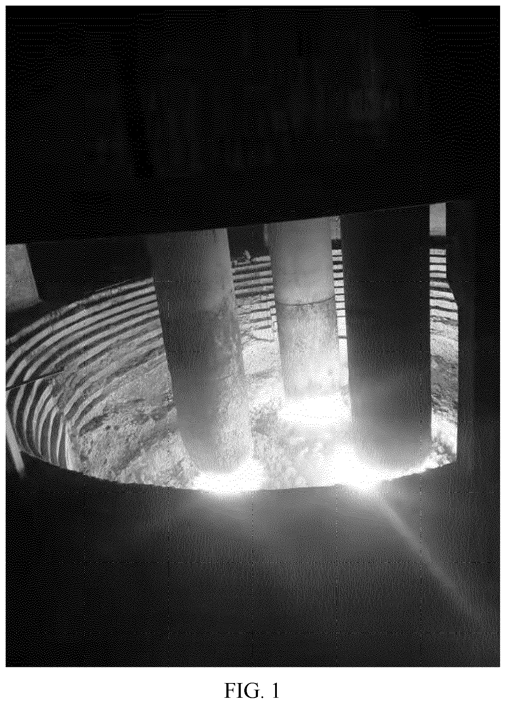

Step 5: As shown in FIG. 1, place the blocks obtained in step 4 in a three-phase carbothermic reduction furnace, and use an electrode that is a graphite electrode or a carbon electrode to perform continuous reactions, with a voltage on a low-voltage side kept at 80-190 KV, a current of 35,000-300,000 A, and an electrode temperature of 2,000-2,400°C, where a single feeding amount is 100 KG, and the time for a single carbothermal reduction reaction is 2-3 h.

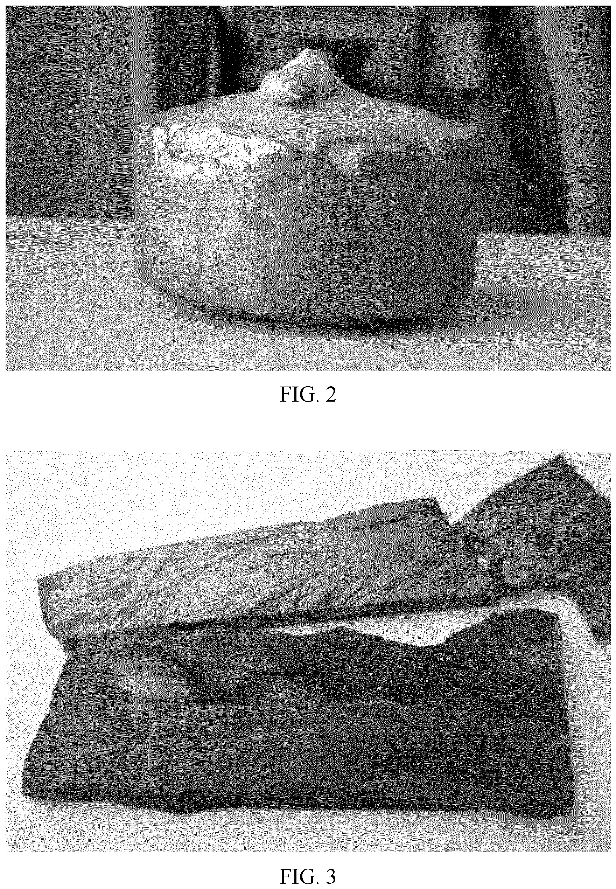

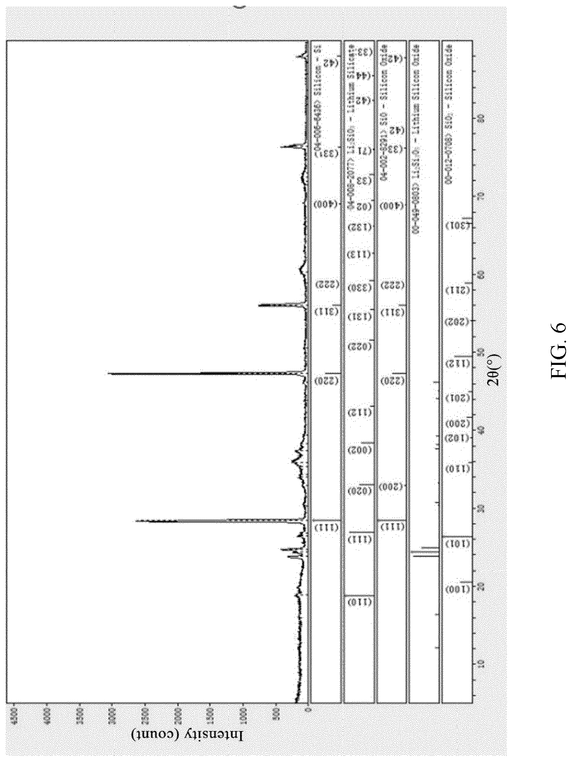

Step 6: As shown in FIG. 2, after step 5 is performed, collect a silicon melt into an ingot casting cell, with a melt flowing-out time of about 30 min, and cool the silicon melt in the ingot casting cell to obtain a finished lithium-containing silicon metal (see FIG. 6 for an XRD scanning image thereof). It was learned through sampling analysis that the obtained product was the lithium-containing silicon metal with purity of about 97%, and Li in the lithium-containing silicon metal existed in forms such as a lithium-silicon alloy, Li₂SiO₂, Li₂SiO₄, Li₂SiO₅, and Li₂SiO₃.

When the present application is implemented, the specification and shape of the finished lithium-containing silicon metal may be selected based on an actual requirement. Further referring to FIG. 3, a finished blocky lithium-containing silicon metal may also be manufactured, which is not specifically limited in the present application.

### Preparation of lithium-containing SiO by performing the following steps

Step 7: Crush the lithium-containing silicon metal obtained in step 6 into lithium-containing silicon metal powder with an average particle size of about 0.5 mm, and evenly mix with SiOz powder at a ratio of 1:2 in part by weight.

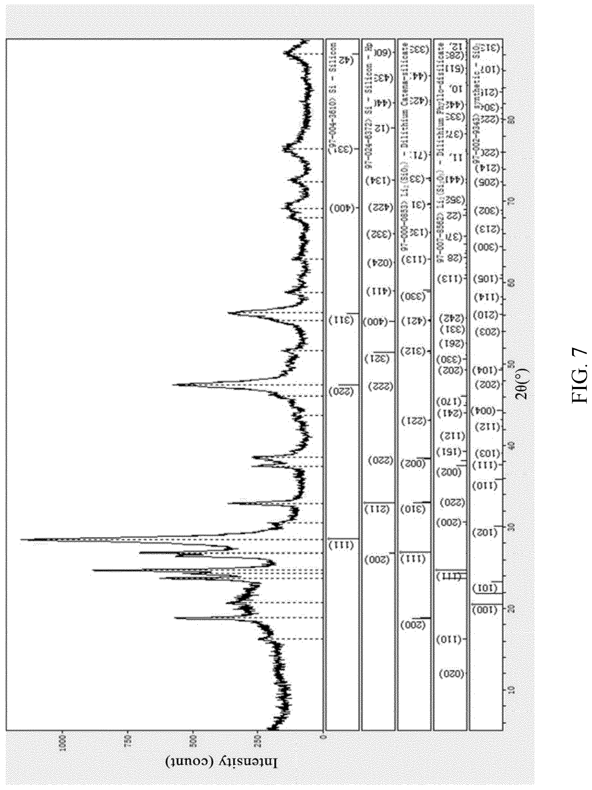

Step 8: Place the mixture obtained in step 7 into a crucible, then place the crucible into a vacuum deposition furnace, heat to about 1200°C, so that the SiOz powder and the lithium-containing silicon metal powder undergo a disproportionated sublimation reaction, and introduce a SiO gas generated by the reaction into a condensation chamber for condensation and crystallization, to obtain blocky lithium-containing SiO (see FIG. 7 for an XRD scanning image thereof).

### Manufacturing of a carbon coating layer by performing the following steps

Step 9: Take and crush the lithium-containing SiO obtained in step 8 into lithium-containing SiO powder with an average particle size of about 15 µm, evenly mix special asphalt, a phenolic resin and furfuryl alcohol with the lithium-containing SiO powder, heat to 900°C in an inert atmosphere for sintering, cool and then take out, and crush and depolymerize to obtain a lithium-containing SiO powder including a carbon coating layer (the average particle size range is 2-30 µm).

### Manufacturing of a negative electrode plate of a button battery by performing the following steps

S10): Take the lithium-containing SiO powder including a carbon coating layer obtained in step 9 as an active material; sequentially weigh CNTs, CMC, SBR and SP as auxiliary materials of a conductive agent, stir by a stirrer at a speed of 600 r/min for 20 min, and defoam for 5 min.

S20): Mix the active material with the auxiliary materials of the conductive agent at a ratio of SP:CNTs:CMC:SBR in part by weight being 80:15.85:0.15:2.5 to obtain slurry, stir by a stirrer at a speed of 600 r/min for 60 min, and defoam for 5 min.

S30): Cut copper foil into an A4 paper size by using a glass plate, then lay the copper foil on a semi-automatic coating machine with the inside facing up, and then further coat the copper foil with the slurry obtained in step S20) by using a scraper, to form an electrode plate.

S40): Heat after the coating is completed, and after a surface of the electrode plate is dry, move the electrode plate to a vacuum drying oven for further drying for about 6 h.

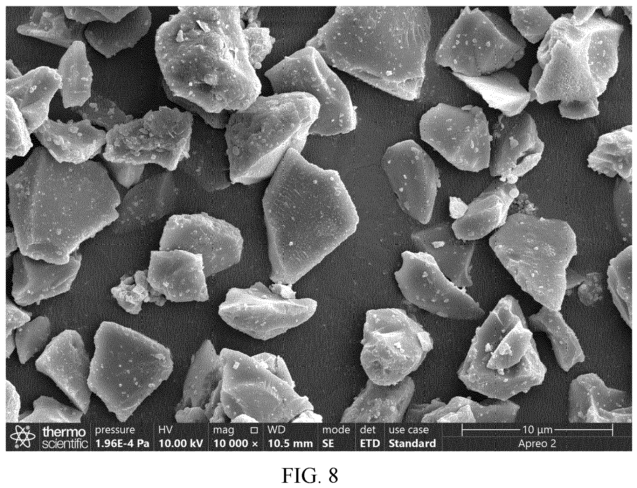

S50): Take the dried electrode plate out of the vacuum drying oven, and then cut and roll; slice the rolled electrode plate by a button battery slicer, and cut the electrode plate into a circular electrode plate with a diameter of 12 mm (see FIG. 8 for an XRD scanning image thereof).

S60): Weigh the circular electrode plate obtained in step S50), and then move the circular electrode plate as a negative electrode plate, a lithium sheet as a positive electrode plate, a lithium sheet separator, a positive electrode housing, a negative electrode housing, a gasket, a spring sheet, and the like into a glove box for assembly, where a model of the battery housing is 2032, the lithium sheet has a size of 16 mm*0.6 mm, and the lithium sheet separator has a size of 19 mm.

S70): Use a pair of tweezers to move the assembled battery to a button battery sealing machine, and package the battery.

The button battery in Embodiment 1 was detected in the present application. Test conditions used are as follows:
After the assembled battery was removed from the glove box, the battery stood at normal temperature (23±2°C) for several hours for aging; and then the battery was clamped on a test system, and was tested based on the following charging and discharging conditions:
Charging and discharging current: 0.1 C (1 C=700 mA/g), and charging and discharging cutoff voltage range: 0.001 V-1.5 V.

The cycle was performed for 5 times based on the charging and discharging conditions.

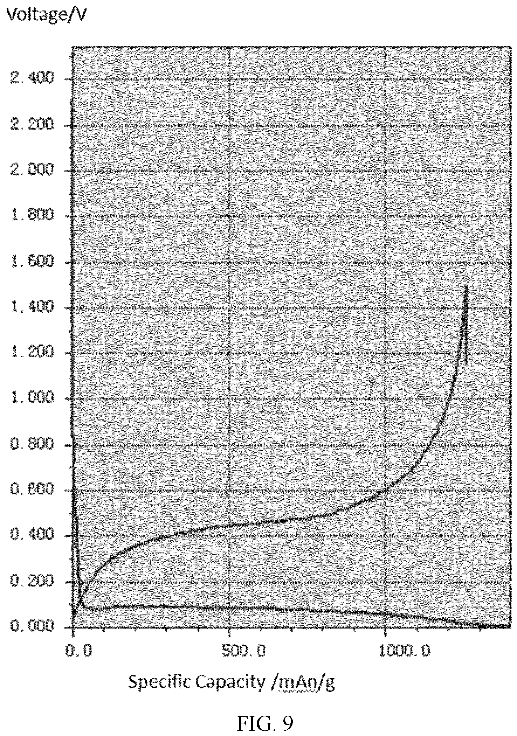

Refer to FIG. 9 for a specific capacity test curve graph of the button battery of Embodiment 1 (where in FIG. 9, a horizontal coordinate is a specific capacity and a vertical coordinate is a charging and discharging voltage). Initial coulombic efficiency data of the battery is shown in the following Table 1.

**Table 1: Data of initial coulombic efficiency (that is, coulombic efficiency measured in the following cycle number 002) of the button battery of Embodiment 1**

| **Cycle number** | **Charge** specific **capacity (mAh/g)** | **Discharge** specific **capacity (mAh/g)** | **Initial coulombic efficiency** |
|---|---|---|---|
| 001 | 0.0 | 0.0 | / |
| 002 | 1258.4 | 1399.8 | 89.89% |

It can be learned from the above table that the initial coulombic efficiency of the button battery in Embodiment 1 was 89.89%.

Embodiment 2: The technical solution of Embodiment 2 is the same as that of Embodiment 1 except that in Embodiment 2, a proportion of a Li source additive accounts for 8wt% of mixed raw materials in part by weight.

Embodiment 3: The technical solution of Embodiment 3 is the same as that of Embodiment 1 except that in Embodiment 3, a proportion of a Li source additive accounts for 10wt% of mixed raw materials in part by weight.

Embodiment 4: The technical solution of Embodiment 4 is the same as that of Embodiment 1 except that of Embodiment 1 in that in Embodiment 4, a proportion of a Li source additive accounts for 2wt% of mixed raw materials in part by weight.

Embodiment 5: The technical solution of Embodiment 5 is the same as that of Embodiment 1 except that in Embodiment 5, a proportion of a Li source additive accounts for 1wt% of mixed raw materials in part by weight.

Embodiment 6: The technical solution of Embodiment 6 is the same as that of Embodiment 1 except that in Embodiment 6, LizO is used as a Li source additive.

Embodiment 7: The technical solution of Embodiment 7 is the same as that of Embodiment 1 except that in Embodiment 7, a Li metal is used as a Li source additive.

Embodiment 8: The technical solution of Embodiment 8 is the same as that of Embodiment 1 except that in Embodiment 8, LiF and Li₂SiO₄ at a ratio of 1:1 are used as Li source additives.

Embodiment 9: The technical solution of Embodiment 9 is the same as that of Embodiment 1 except that in Embodiment 9, in step 1, petalite, montebrasite and eucryptite are used as raw materials of a Li-containing mineral.

Embodiment 10: The technical solution of Embodiment 10 is the same as that of Embodiment 1 except that in Embodiment 10, in step 1, SiO2 ores are used as a raw material.

Embodiment 11: The technical solution of Embodiment 11 is the same as that of Embodiment 1 except that in Embodiment 11, an Al-source reducing agent is used instead of a C-source reducing agent to undergo an aluminothermic reduction reaction with lithium-containing SiO₂ ore particles, and reaction conditions and a reaction device may be conventionally adjusted based on an actual reaction requirement to obtain a silicon melt.

Embodiment 12: The technical solution of Embodiment 12 is the same as that of Embodiment 1 except that in Embodiment 12, an Mg-source reducing agent is used instead of a C-source reducing agent to undergo a magnesiothermic reduction reaction with lithium-containing SiO₂ ore particles, and reaction conditions and a reaction device may be conventionally adjusted based on an actual reaction requirement to obtain a silicon melt.

With the same testing conditions as those of Embodiment 1, it is learned through testing that the capacities of the batteries in Embodiments 2-12 were kept at 1200-1600 mAh/g, and the initial coulombic efficiency of the batteries was 86%-92%. Compared with those of other embodiments, the specific capacity and the initial coulombic efficiency of the battery in Embodiment 10 were somewhat decreased. Therefore, Embodiment 10 is a less preferred embodiment compared with other embodiments.

Comparative Example 1: The technical solution of Comparative Example 1 is the same as that of Embodiment 1 except that in Comparative Example 1, step 3 is canceled, and in step 4, the mixture obtained in step 2 is directly made into blocks with appropriate sizes.

With the same testing conditions as those of Embodiment 1, it is learned through testing that the specific capacity of the battery was about 1000 mAh/g, and the initial coulombic efficiency of the battery was about 84%.

Comparative Example 2: The technical solution of Comparative Example 2 is the same as that of Embodiment 1 except that in Comparative Example 2, in step 1, SiO₂ ores are used as a raw material; step 3 is canceled, and in step 4, the mixture obtained in step 2 is directly made into blocks with appropriate sizes.

With the same testing conditions as those of Embodiment 1, it is learned through testing that the specific capacity of the battery was about 550 mAh/g, and the initial coulombic efficiency of the battery was less than 70%.

Comparative Example 3: The solution of Embodiment 1 in patent No. CN105789577A is used, the process implementation is difficult, and an operation risk is high.

With the same testing conditions as those of Embodiment 1, it is learned through testing that the specific capacity of the battery was about 950 mAh/g, and the initial coulombic efficiency of the battery was about 79%.

Comparative Example 4: The solution of Embodiment 1 in patent No. CN110993949A is used, the process implementation is difficult, and an operation risk is high.

With the same testing conditions as those of Embodiment 1, it is learned through testing that the specific capacity of the battery was about 980 mAh/g, and the initial coulombic efficiency of the battery was about 87%.

Through the comparative implementation effects of the foregoing embodiments and comparative examples, it can be further confirmed that in the embodiments of the present invention, the raw materials used are abundant, easy to obtain and low in cost; a preparation route used is simple and convenient to implement, facilitates large-scale mass production and application, and reduces a production risk, and Li in the obtained lithium-containing silicon metal and lithium-containing SiO are evenly distributed. When the lithium-containing SiO including a carbon coating layer in the embodiment of the present application is used as an active raw material for preparing a negative electrode plate of a battery, the battery can have a higher specific capacity and initial coulombic efficiency.

It will be clear to a person skilled in the art that the present invention is not limited to the details of the foregoing example embodiments, and the present invention can be implemented in other specific forms without departing from the spirit or essential features of the present invention. Therefore, the embodiments should be regarded in all respects as examples rather than as restrictive, and the scope of the present invention is defined by the appended claims rather than the foregoing descriptions. Therefore, all changes falling within the meanings and scope of equivalent elements of the claims are included in the present invention. Any reference numeral in the claims shall not be construed as limiting the claims.

In addition, it should be understood that, although this specification has been described with reference to embodiments, not every embodiment includes only one independent technical solution, and such description of this specification is by way of clarity only. A person skilled in the art should take this specification as a whole, and the technical solutions of the embodiments may be combined as appropriate to obtain other embodiments that can be understood by a person skilled in the art.

## Claims

1. A method for preparing a lithium-containing silicon metal, wherein raw materials comprise SiO₂ ore particles and a reducing agent, and at least part of the SiO₂ ore particles and the reducing agent undergo a heating and reduction reaction in a reducing furnace to obtain a silicon melt; and the raw materials further comprise a Li source additive, and at least part of a Li source in the Li source additive forms a lithium-silicon alloy with the silicon melt during the heating and reduction reaction to obtain a lithium-containing silicon metal.

2. The preparation method according to claim 1, wherein the SiO₂ ore particles comprise lithium-containing SiOz ore particles, which are obtained from a Li-containing mineral through crushing, separation and/or flotation; /and the Li-containing mineral comprises spodumene and/or lepidolite and/or petalite and/or montebrasite and/or eucryptite.

3. The preparation method according to claim 1 or 2, wherein a proportion of SiO₂ in the SiO₂ ore particles is 30wt%-99wt% in part by weight, and/or an average particle size of the SiO₂ ore particles is not greater than 10 mm.

4. The preparation method according to claim 1, wherein the Li source additive accounts for 0.05wt%-35wt% of the raw materials in part by weight; and/or the Li source additive comprises Li and/or LizO and/or Li₂CO₃ and/or LiOH and/or LiH and/or LiF and/or Li₂SiO₄ and/or a lithium alloy; and/or the reducing agent comprises a C-source reducing agent or an Al-source reducing agent or an Mg-source reducing agent, which is used to correspondingly undergo a carbothermic reduction reaction, an aluminothermic reduction reaction, or a magnesiothermic reduction reaction with the SiO₂ ore particles.

5. The preparation method according to claim 1, wherein the melt of the lithium-containing silicon metal is transferred to an ingot casting cell, and the melt in the ingot casting cell is cooled to obtain a solid lithium-containing silicon metal.

6. A lithium-containing silicon metal, wherein the lithium-containing silicon metal is prepared by using the preparation method according to any one of claims 1 to 5, and the lithium-containing silicon metal comprises a lithium-silicon alloy and a lithium silicate salt.

7. Lithium-containing SiO, wherein with lithium-containing silicon metal according to claim 6 and SiOz powder as raw materials, at least part of the lithium-containing silicon metal and the SiOz powder undergo a disproportionated sublimation reaction to obtain the lithium-containing SiO.

8. The lithium-containing SiO according to claim 7, wherein the lithium-containing silicon metal is pre-crushed into lithium-containing silicon metal powder, the lithium-containing silicon metal powder and the SiOz powder are mixed and then placed in a crucible, and the crucible is placed in a vacuum deposition furnace for the disproportionated sublimation reaction; and a lithium-containing SiO gas generated by the disproportionated sublimation reaction is condensed to form blocky lithium-containing SiO.

9. The lithium-containing SiO according to claim 7, wherein the lithium-containing SiO is crushed into lithium-containing SiO powder, and an outer surface of at least part of the lithium-containing SiO powder is coated with a carbon coating layer, to obtain lithium-containing SiO powder comprising a carbon coating layer.

10. An application of the lithium-containing SiO according to any one of claims 7 to 9, wherein the lithium-containing SiO powder comprising a carbon coating layer is used as an active raw material for preparing a negative electrode plate of a battery.
